# EUROPEAN PATENT APPLICATION

(11) **EP 4 113 267 A1**
(43) Date of publication of application: **04.01.2023**
(21) Application number: 22179103.1
(22) Date of filing: 15.06.2022
(51) Int. Cl.: G06F 3/04883

(54) **DISPLAY SYSTEM, METHOD FOR PERFORMING CHARACTER RECOGNITION, AND CARRIER MEDIUM**

(30) Priority: 29.06.2021 JP 2021107458
(71) Applicant: Ricoh Company, Ltd., Tokyo 143-8555 (JP)
(72) Inventor: Yoshida, Takuroh, Tokyo, 143-8555 (JP)
(74) Representative: Marks & Clerk LLP

(57) **Abstract**

A display system (2,19) includes an input receiving unit (21) to receive a plurality of stroke data input to a touch panel by an input device and a display control unit (24) to display the plurality of stroke data. The plurality of stroke data includes first stroke data and second stroke data input after the first stroke data. The display system further includes an area setting unit (28) to set a determination area differently depending on whether an elapsed time from separation of the input device from the touch panel after input of the first stroke data exceeds a threshold. The determination area is for determining whether to include the second stroke data in a recognition group including the first stroke data. The display system further includes a character recognition unit (23) to perform character recognition on the recognition group. The display control unit (24) displays, on a screen, a result of the character recognition.

## Description

### BACKGROUND

### Technical Field

Embodiments of the present disclosure relate to a display system, a method for performing character recognition, and a carrier medium.

### Related Art

There are display apparatuses that convert handwritten data to a character string (character codes) and displays the character string on a screen by using a handwriting recognition technology. A display apparatus having a relatively large touch panel is used in a conference room or the like and is shared by a plurality of users as an electronic whiteboard or the like. In some cases, a display apparatus is used as a written communication tool.

A related-art display apparatus imposes on a user a constraint that the user has to input handwriting in an input frame, and there has been proposed a technology for eliminating the input frame for converting the handwriting data (for example, see Japanese Unexamined Patent Application Publication No. 2019-220155).

Japanese Unexamined Patent Application Publication No. 2019-220155 discloses a handwriting input device that sets a neighborhood rectangle area by enlarging a rectangular area of a handwritten object by 50% of an estimated character size in the horizontal direction and by 80% of the estimated character size in the vertical direction. The handwriting input device performs character recognition determining that the next character handwritten in the neighborhood rectangle area belongs to the same recognition group same as that of the previously input stroke data.

However, in the conventional technology, the area for determining whether to include stroke data in the same recognition group is not changed in accordance with the elapse of time after an input device is separated from a touch panel. Accordingly, for example, in a case where the user handwrites a plurality of characters while narrowing the width between characters, there is a drawback that stroke data of a first character and stroke data of a second character may be erroneously recognized as stroke data of the same character.

### SUMMARY

In view of the foregoing, an object of the present disclosure is to provide a display apparatus that sets an area for determining whether to include stroke data in the same recognition group differently in accordance with an elapsed time from when an input device is separated from a touch panel, so as to accurately recognize the stroke data.

An embodiment provides a display system that includes an input receiving unit to receive a plurality of stroke data input to a touch panel by an input device and a display control unit configured to display the plurality of stroke data. The plurality of stroke data includes first stroke data and second stroke data input after the first stroke data. The display system further includes an area setting unit to set a determination area differently depending on whether an elapsed time from separation of the input device from the touch panel after input of the first stroke data exceeds a threshold. The determination area is for determining whether to include the second stroke data in a recognition group including the first stroke data. The display system further includes a character recognition unit to perform character recognition on the recognition group. The display control unit displays, on a screen, a result of the character recognition.

Another embodiment provides a method for performing character recognition on a plurality of stroke data. The method includes receiving a plurality of stroke data input to a touch panel by an input device and displaying the plurality of stroke data. The plurality of stroke data includes first stroke data and second stroke data input after the first stroke data. The method further includes setting a determination area differently depending on whether an elapsed time from separation of the input device from the touch panel after input of the first stroke data exceeds a threshold. The determination area is for determining whether to include the second stroke data in a recognition group including the first stroke data. The method further includes performing character recognition of the recognition group; and displaying, on a screen, a result of the character recognition.

Another embodiment provides a carrier medium carrying computer readable codes for controlling a computer to carry out the method described above.

According to one or more embodiments, an area for determining whether to include stroke data in the same recognition group is differently set in accordance with elapsed time from when an input device is separated from a touch panel, so as to accurately recognize stroke data.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIGS. 1A and 1B are diagrams schematically illustrating a recognition group rectangle and a neighborhood rectangle;
FIGS. 2A to 2C are diagrams illustrating examples of a general arrangement of a display apparatus according to embodiments;
FIG. 3 is a block diagram illustrating an example of a hardware configuration of the display apparatus according to one embodiment;
FIG. 4 is a block diagram illustrating an example of a functional configuration of the display apparatus according to one embodiment;
FIGS. 5A, 5B, and 5C are diagrams illustrating data related to stroke data stored in a stroke data storage area, according to one embodiment;
FIG. 6 is a diagram illustrating a recognition group in a case where a predetermined time has not elapsed from a pen-up according to one embodiment;
FIG. 7 is a diagram illustrating a recognition group in a case where the predetermined time has elapsed from a pen-up according to one embodiment;
FIG. 8 is a diagram illustrating an example of hand drafted data in which handwritten characters and a table are mixed;
FIG. 9 is a diagram illustrating conditions under which stroke data is not included in the recognition group of previous stroke data, according to one embodiment;
FIG. 10 is a flowchart illustrating a procedure performed by a character recognition unit for determining stroke data of the same recognition group, according to one embodiment;
FIG. 11 is a flowchart for determining whether the stroke data satisfies the conditions described with reference to FIG. 9;
FIG. 12 is a diagram illustrating an example of an operation guide and selectable character string candidates provided by the display apparatus according to one embodiment; and
FIG. 13 is a schematic diagram illustrating an example of a configuration of a display system according to one embodiment.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A description is given below of a display apparatus and a method for changing an area by the display apparatus according to embodiments of the present disclosure, with reference to the attached drawings.

### Embodiment 1

### Outline of Recognition Group Rectangle and Neighborhood Rectangle

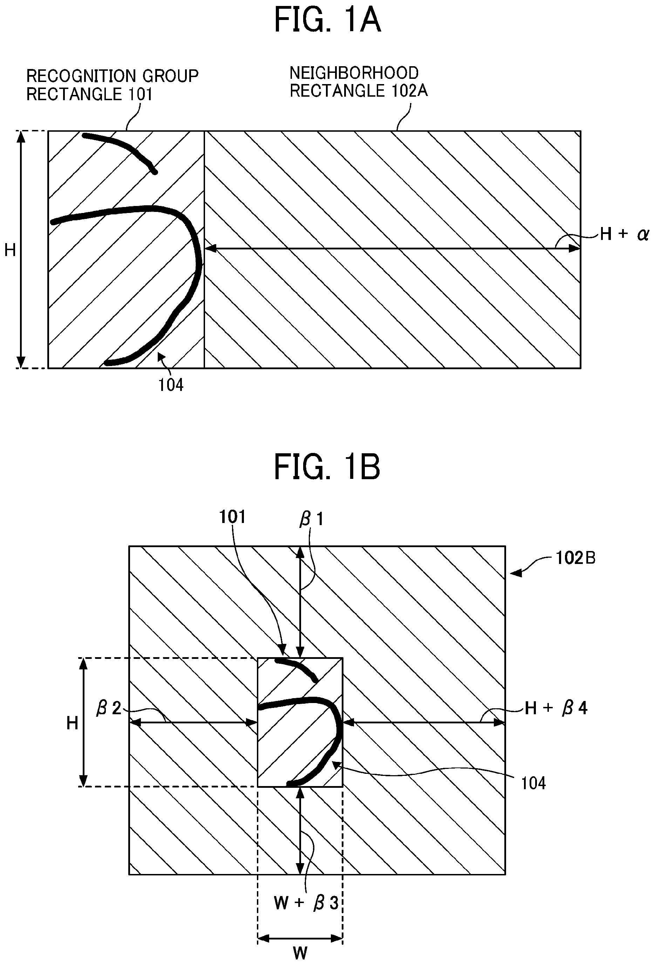

FIGS. 1A and 1B are diagrams schematically illustrating a recognition group rectangle 101 and neighborhood rectangles 102A and 102B (collectively referred to as the neighborhood rectangle 102 when not distinguished from each other). The neighborhood rectangles 102A and 102B are examples of a determination area. In the present embodiment, the recognition group rectangle 101 is a circumscribed rectangle of one or more stroke data. The neighborhood rectangle 102 is an area for determining whether or not to include stroke data to be handwritten next in a recognition group of the previous stroke data. The recognition group is a group of stroke data forming hand drafted data to be collectively recognized as one or more characters. The neighborhood rectangle 102 is set based on the recognition group rectangle 101, and the stroke data in the recognition group rectangle 101 and stroke data in the neighborhood rectangle 102 belong to the same recognition group.

One of the features of the display apparatus according to the present embodiment is setting the neighborhood rectangle 102 differently depending on whether a time T has elapsed from a pen-up (whether elapsed time from separation of an input device from a touch panel exceeds a threshold). The time T (threshold) is predetermined and may be stored in a memory, for example, by a manufacturer. Alternatively, the time T may be set by a user. "Pen-up" means that the input device having been in contact with a display (touch panel) is separated from the display (i.e., a pen lift event). "Pen-up" corresponds to disengaging the writing mode for inputting a stroke.

"The time T has elapsed from the pen-up" means that no hand drafted input by the user is detected during the time T.

"The time T has not elapsed from the pen-up" means that hand drafted input by the user is detected in the time T. "The time T has not elapsed from the pen-up" may be referred to as "in successive input" or "successively inputting."

FIG. 1A illustrates an example of the neighborhood rectangle 102A for a case where the time T has elapsed from the pen-up. In FIG. 1A, the time T has elapsed after a character 104 " 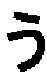 " (a Japanese hiragana character pronounced as "u") is handwritten. The neighborhood rectangle 102A in this case is set as follows.
Height: height H of the recognition group rectangle 101
Width: height H of the recognition group rectangle 101 + α

In other words, when the time T has elapsed from the pen-up, on the assumption of horizontal writing in Japanese, the neighborhood rectangle 102A has a height same as that of the character already handwritten (an upper end and a lower end same as those of the recognition group rectangle 101) and a width by the size of next character. The width of the neighborhood rectangle 102A extends in the rightward direction from the right end of the recognition group rectangle 101. The value "a" is added as a margin (offset) to the neighborhood rectangle 102A. In other words, the right end of the neighborhood rectangle 102 is shifted by the height H + the value α from the right end of the recognition group rectangle 101. The offset has a distance (including a distance of 0) and is also referred to as a margin value, a correction value, an adjustment value, an additional value, or a surplus value. Note that, in the state illustrated in FIG. 1A, the handwritten character 104 " 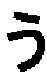 " may be character-recognized or may remain as stroke data.

FIG. 1B illustrates an example of the neighborhood rectangle 102B (a surrounding area) for a case where the time T has not elapsed from the pen-up (in successive input). In FIG. 1A, the time T has not yet elapsed from the pen-up after hand drafted input of the character 104 " 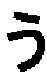 ." The neighborhood rectangle 102B during such successive input is set as follows.

The neighborhood rectangle 102B is set with respect to the current recognition group rectangle 101 as follows.
Upper: a value β1,
Left: β2,
Lower: width W of recognition group rectangle 101+ β3, and
Right: height H of recognition group rectangle 101+ β4

Each of the values β1 to β4 are margins (offset) to the neighborhood rectangle 102B. In other words, the upper end, the lower end, the left end, and the right end of the neighborhood rectangle 102 are respectively shifted (offset) from those of the recognition group rectangle 101 by the value β1, the width W + the value β3, the value β2, and the height H + the value β4. In other words, the neighborhood rectangle 102B is an area generated by enlarging the current recognition group rectangle 101 upward, downward, leftward, and rightward.

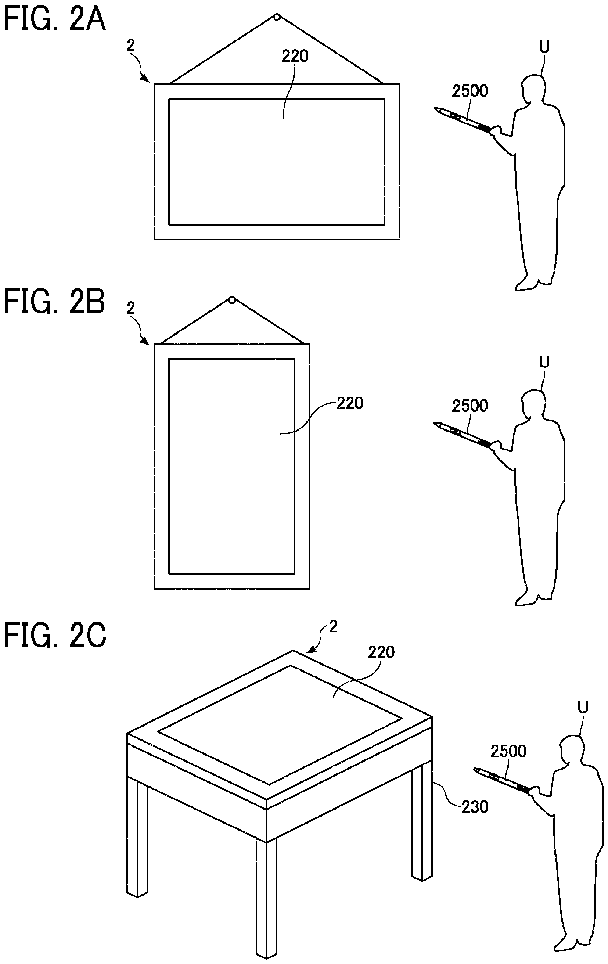

By differently setting the neighborhood rectangle 102 in this manner, a display apparatus 2 (see FIGS. 2A to 2C) according to the present embodiment easily recognizes a character or the like intended by the user from the stroke data. When the user adds a character to the right of the character 104 " 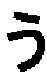 ," the user often expects the display apparatus to collectively recognize the character 104 " 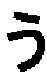 " and the added character. By contrast, when another character is handwritten, for example, below the character 104 " 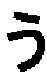 ," it can be assumed that the user has performed line feed. In this case, the user often handwrites a character string unrelated to the previous character 104. In such a case, there is a high possibility that the character 104 and the character below the character 104 are erroneously character-recognized as a character string different from what intended by the user, if collectively recognized. In other words, if the user is not in successive input, it is preferable to limit the neighborhood rectangle 102 to the right of the recognition group rectangle 101. In this specification, to the right of the recognition group rectangle 101 indicates a rightward direction of the recognition group rectangle 101 displayed on the screen as viewed from the user facing the screen. The same applies to the left, the upper, and the lower. The screen may be integral with the touch panel.

However, in successive input, the position at which the user handwrites the next stroke with respect to the stroke data being written varies depending on the stroke order of the character. For example, in the case of a Japanese hiragana character " 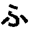 ," the third stroke is handwritten on the left of the second stroke, and the third stroke should also be character-recognized as a part of " 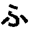 ." As another example, an upper dot (superscript dot) included in an alphabet of "i" or "j" is handwritten above the first stroke depending on the stroke order, but the character including the upper dot should be character-recognized. In this way, depending on the character, stroke data is also added above or to the left of the recognition group rectangle 101 (in many cases, stroke data is added below or to the right of the recognition group rectangle). In other words, in successive input, it is preferable to expand the neighborhood rectangle 102 around the recognition group rectangle 101.

In this way, the stroke data of the same recognition group (a plurality of stroke data to be recognized collectively) differs depending on whether or not successive input is being performed. In the present embodiment, since the display apparatus differently sets the handwriting area (the neighborhood rectangle 102) of the stroke data to be included in the same recognition group in accordance with the time T from the pen-up, the neighborhood rectangle 102 can be appropriately set.

### Terms

"Input device" may be any means with which a user inputs handwriting (hand drafting) by designating coordinates on a touch panel. Examples thereof include a pen, a human finger, a human hand, and a bar-shaped member.

A series of user operations including engaging a writing mode, recording movement of an input device or portion of a user, and then disengaging the writing mode is referred to as a "stroke." The engaging of the writing mode may include, if desired, pressing an input device against a display or screen, and disengaging the writing mode may include releasing the input device from the display or screen. Alternatively, a stroke includes tracking movement of the portion of the user without contacting a display or screen. In this case, the writing mode may be engaged or turned on by a gesture of a user, pressing a button by a hand or a foot of the user, or otherwise turning on the writing mode, for example using a pointing device such as a mouse. The disengaging of the writing mode can be accomplished by the same or different gesture used to engage the writing mode, releasing the button, or otherwise turning off the writing mode, for example using the pointing device or mouse. "Stroke data" is data displayed on a display based on a trajectory of coordinates of a stroke input with the input device. Such stroke data may be interpolated appropriately. "Hand drafted data" is data having one or more stroke data. "Hand drafted data" is data used for displaying (reproducing) a screen image including objects handwritten or hand-drafted by the user. "Hand drafted input" relates to a user input such as handwriting, drawing, and other forms of input. The hand drafted input may be performed via touch interface, with a tactile object such as a pen or stylus or with the user's body. The hand drafted input may also be performed via other types of input, such as gesture-based input, hand motion tracking input or other touch-free input by a user.

A character string obtained by character recognition and conversion from hand drafted data may include, in addition to text data, data displayed based on a user operation, such as a stamp of a given character or mark such as "complete," a graphic such as a circle or a star, or a line. Characters include numbers, alphabets, symbols, and the like. A character is also referred to as text data.

"Collectively recognizing a plurality of stroke data" means that the entirety of the plurality of stroke data is recognized as a character string appropriate as a whole. The character string after recognition may include a single character or a plurality of characters.

### Configuration of Apparatus

Referring to FIGS. 2A to 2C, a description is given of a general arrangement of the display apparatus 2 according to the present embodiment. FIGS. 2A to 2C are diagrams illustrating examples of general arrangement of the display apparatus 2. FIG. 2A illustrates, as an example of the display apparatus 2, an electronic whiteboard having a landscape-oriented rectangular shape and being hung on a wall.

As illustrated in FIG. 2A, the display apparatus 2 includes a display 220 (a screen). A user U handwrites (also referred to as "inputs" or "draws"), for example, a character on the display 220 using a pen 2500.

FIG. 2B illustrates, as another example of the display apparatus 2, an electronic whiteboard having a portrait-oriented rectangular shape and being hung on a wall.

FIG. 2C illustrates, as another example, the display apparatus 2 placed on the top of a desk 230. It is not necessary to adjust the height of the desk 230, which is a general-purpose desk, when the display apparatus 2 having a thickness of about 1 centimeter is placed thereon. Further, the display apparatus 2 is portable and easily moved by the user.

Examples of an input method of coordinates by the pen 2500 include an electromagnetic induction method and an active electrostatic coupling method. In other example, the pen 2500 further has functions such as drawing pressure detection, inclination detection, a hover function (displaying a cursor before the pen is brought into contact), or the like.

### Hardware Configuration

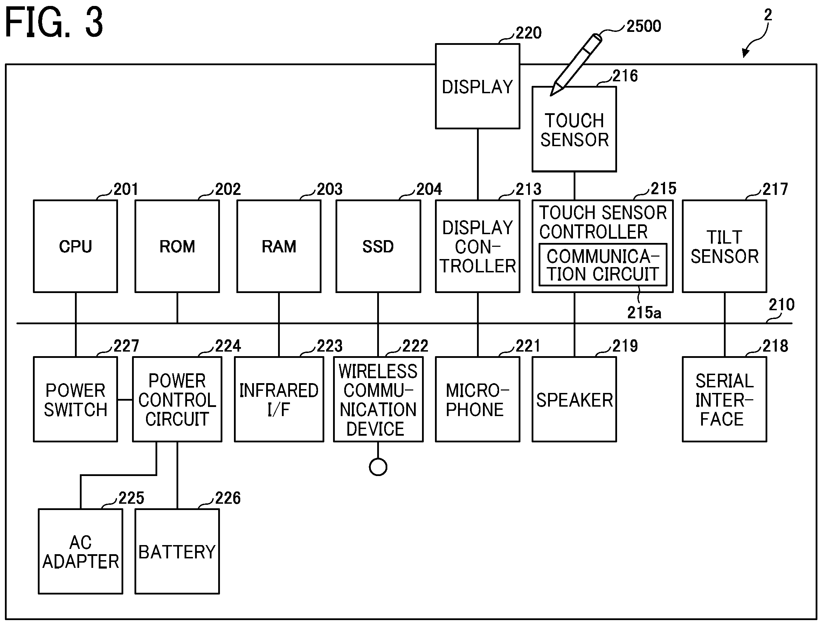

A description is given of a hardware configuration of the display apparatus 2 according to the present embodiment, with reference to FIG. 3. The display apparatus 2 has a configuration of an information processing apparatus or a computer as illustrated in the drawing. FIG. 3 is a block diagram illustrating an example of the hardware configuration of the display apparatus 2. As illustrated in FIG. 3, the display apparatus 2 includes a central processing unit (CPU) 201, a read only memory (ROM) 202, a random access memory (RAM) 203, and a solid state drive (SSD) 204.

The CPU 201 controls entire operation of the display apparatus 2. The ROM 202 stores a control program such as an initial program loader (IPL) to boot the CPU 201. The RAM 203 is used as a work area for the CPU 201.

The SSD 204 stores various data such as an operating system (OS) and a control program for display apparatuses. This program may be an application program that runs on an information processing apparatus equipped with a general-purpose operating system (OS) such as WINDOWS, MAC OS, ANDROID, and IOS. In this case, the display apparatus 2 is usually used as a general-purpose information processing device. However, when a user executes an installed application program, the display apparatus 2 receives handwriting or the like performed by the user similarly to a dedicated display apparatus.

The display apparatus 2 further includes a display controller 213, a touch sensor controller 215, a touch sensor 216, a tilt sensor 217, a serial interface 218, a speaker 219, the display 220, a microphone 221, a wireless communication device 222, an infrared interface (I/F) 223, a power control circuit 224, an alternating current (AC) adapter 225, a battery 226, and a power switch 227.

The display controller 213 controls display of an image for output to the display 220, etc. The touch sensor 216 detects that the pen 2500, a user's hand or the like is brought into contact with the display 220. The pen or the user's hand is an example of input device. The touch sensor 216 also receives a pen identifier (ID).

The touch sensor controller 215 controls processing of the touch sensor 216. The touch sensor 216 performs coordinate input and coordinate detection. More specifically, in a case of optical sensing, for inputting and detecting coordinates, the display 220 is provided with two light receiving and emitting devices disposed on both upper side ends of the display 220, and a reflector frame surrounding the sides of the display 220. The light receiving and emitting devices emit a plurality of infrared rays in parallel to a surface of the display 220. Light-receiving elements receive lights passing in the direction that is the same as an optical path of the emitted infrared rays, which are reflected by the reflector frame. The touch sensor 216 outputs position information of the infrared ray that is blocked by an object after being emitted from the two light receiving and emitting devices, to the touch sensor controller 215. Based on the position information of the infrared ray, the touch sensor controller 215 detects a specific coordinate that is touched by the object. The touch sensor controller 215 further includes a communication circuit 215a for wireless communication with the pen 2500. For example, when communication is performed in compliance with a standard such as BLUETOOTH (registered trademark), a commercially available pen can be used.

When one or more pens 2500 are registered in the communication circuit 215a in advance, the display apparatus 2 communicates with the pen 2500 without connection setting between the pen 2500 and the display apparatus 2, performed by the user.

The power switch 227 turns on or off the power of the display apparatus 2. The tilt sensor 217 detects the tilt angle of the display apparatus 2. The tilt sensor 217 is mainly used to detect whether the display apparatus 2 is being used in any of the states in FIG. 2A, 2B, or 2C. For example, the display apparatus 2 automatically changes the thickness of characters or the like depending on the detected state.

The serial interface 218 is a communication interface to connect the display apparatus 2 to extraneous sources such as a universal serial bus (USB). The serial interface 218 is used to input information from extraneous sources. The speaker 219 is used to output sound, and the microphone 221 is used to input sound. The wireless communication device 222 communicates with a terminal carried by the user and relays the connection to the Internet, for example.

The wireless communication device 222 performs communication in compliance with Wi-Fi, BLUETOOTH (registered trademark) or the like. Any suitable standard can be applied other than the Wi-Fi and BLUETOOTH (registered trademark). The wireless communication device 222 forms an access point. When a user sets a service set identifier (SSID) and a password that the user obtains in advance in the terminal carried by the user, the terminal is connected to the access point.

It is preferable that two access points are provided for the wireless communication device 222 as follows:
(a) Access point to the Internet; and (b) Access point to Intra-company network to the Internet. The access point (a) is for users other than, for example, company staffs. The access point (a) does not allow access from such users to the intra-company network but allow access to the Internet. The access point (b) is for intra-company users and allows such users to access the intra-company network and the Internet.

The infrared I/F 223 detects an adjacent display apparatus 2. The infrared I/F 223 detects an adjacent display apparatus 2 using the straightness of infrared rays. Preferably, one infrared I/F 223 is provided on each side of the display apparatus 2. This configuration allows the display apparatus 2 to detect the direction in which the adjacent display apparatus 2 is disposed. Such arrangement extends the screen. Accordingly, the user can instruct the adjacent display apparatus 2 to display a previous handwritten object. That is, one display 220 (screen) corresponds to one page, and the adjacent display 220 displays the handwritten object on a separate page.

The power control circuit 224 controls the AC adapter 225 and the battery 226, which are power supplies for the display apparatus 2. The AC adapter 225 converts alternating current shared by a commercial power supply into direct current.

In a case where the display 220 is a so-called electronic paper, the display 220 consumes little or no power to maintain image display. In such case, the display apparatus 2 may be driven by the battery 226. With this structure, the display apparatus 2 is usable as, for example, a digital signage in places such as outdoors where power supply connection is not easy.

The display apparatus 2 further includes a bus line 210. The bus line 210 is an address bus or a data bus that electrically connects the elements illustrated in FIG. 3, such as the CPU 201, to each other.

The touch sensor 216 is not limited to the optical type. In another example, the touch sensor 216 is a different type of detector, such as a capacitive touch panel that identifies the contact position by detecting a change in capacitance, a resistance film touch panel that identifies the contact position by detecting a change in voltage of two opposed resistance films, or an electromagnetic induction touch panel that identifies the contact position by detecting electromagnetic induction caused by contact of an object to a display. The touch sensor 216 can be of a type that does not require an electronic pen to detect whether the pen tip is in contact with the surface of the display 220. In this case, a fingertip or a pen-shaped stick is used for touch operation. In addition, the pen 2500 can have any suitable shape other than a slim pen shape.

### Functions

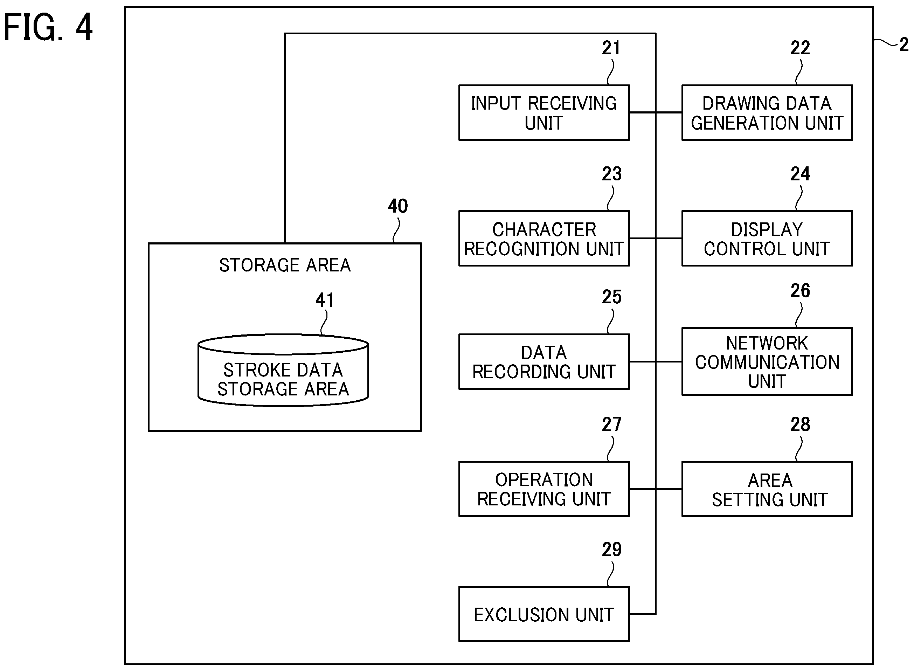

A description is now given of a functional configuration of the display apparatus 2 according to the present embodiment, with reference to FIG. 4. FIG. 4 is a block diagram illustrating an example of the functional configuration of the display apparatus 2 according to the present embodiment. The display apparatus 2 includes an input receiving unit 21, a drawing data generation unit 22, a character recognition unit 23, a display control unit 24, a data recording unit 25, a network communication unit 26, an operation receiving unit 27, an area setting unit 28, and an exclusion unit 29. The functional units of the display apparatus 2 are implemented by or are caused to function by operation of any of the elements illustrated in FIG. 3 according to an instruction from the CPU 201 according to a program loaded from the SSD 204 to the RAM 203.

The input receiving unit 21 receives input of stroke data (coordinate point sequence) by detecting coordinates of a position at which an input device such as the pen 2500 contacts the touch sensor 216. The drawing data generation unit 22 acquires the coordinates (i.e., contact coordinates) of the position touched by the pen tip of the pen 2500 from the input receiving unit 21.

The drawing data generation unit 22 connects a plurality of contact coordinates into a coordinate point sequence by interpolation, to generate stroke data.

The character recognition unit 23 performs character recognition processing on one or more stroke data (hand drafted data) input by the user and converts the stroke data into one or more character codes. The character recognition unit 23 recognizes characters (of multilingual languages such as English as well as Japanese), numbers, symbols (e.g., %, $, and &), graphics (e.g., lines, circles, and triangles) concurrently with a pen operation by the user. Although various algorithms have been proposed for the recognition method, a detailed description is omitted on the assumption that known techniques are used in the present embodiment.

The display control unit 24 displays, on the display 220, for example, hand drafted data, a character string converted from the hand drafted data, and an operation menu to be operated by the user. The data recording unit 25 stores hand drafted data input on the display apparatus 2, a converted character string, a screenshot on a personal computer (PC) screen, a file, and the like in a storage area 40. The network communication unit 26 connects the wireless communication device 222 to a network such as a local area network (LAN) and transmits and receives data to and from other devices via the network.

The area setting unit 28 sets the neighborhood rectangle 102 for determining whether stroke data is to be included in the recognition group differently depending on whether the time T has elapsed after the input device is separated from the touch panel.

When the stroke data received by the input receiving unit 21 satisfies a predetermined condition, the exclusion unit 29 excludes, from the recognition group, even stroke data contained in the neighborhood rectangle 102.

The display apparatus 2 includes the storage area 40 implemented by, for example, the SSD 204 or the RAM 203 illustrated in FIG. 3. The storage area 40 includes a stroke data storage area 41.

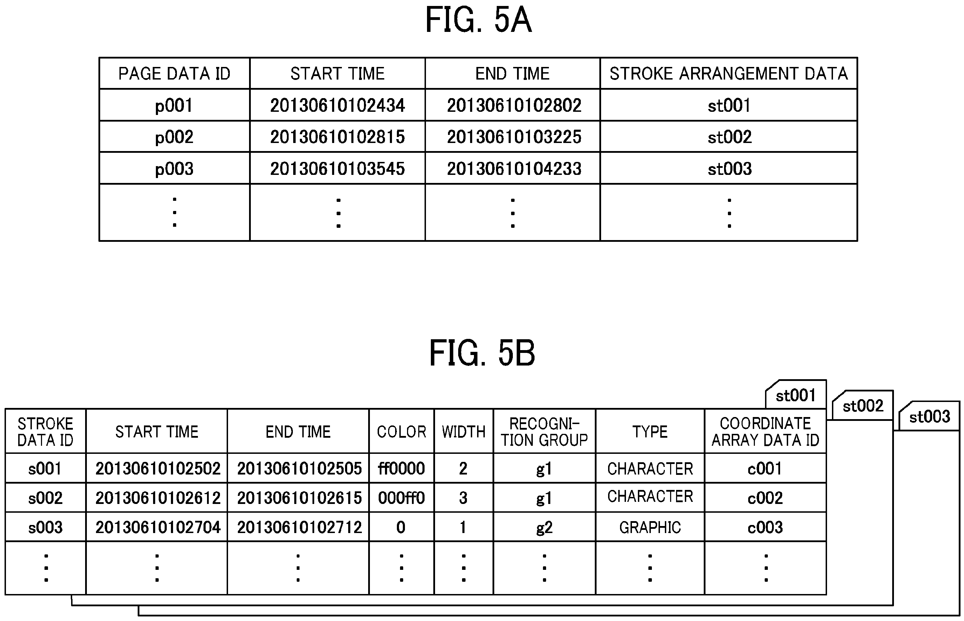

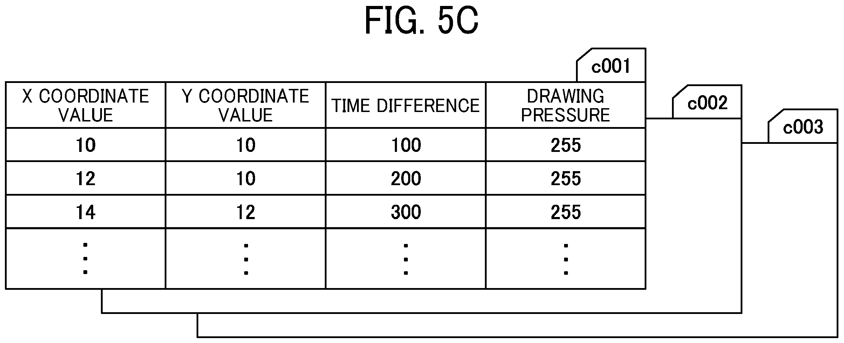

FIGS. 5A, 5B, and 5C are diagrams illustrating data related to stroke data stored in the stroke data storage area 41. FIG. 5A is a conceptual diagram illustrating page data. The page data is data of one page displayed on the display 220. As illustrated in FIG. 5A, the page data includes data items of page data ID for identifying a page, start time indicating the time at which display of the page is started, end time indicating the time at which hand drafted input to the page is stopped, and stroke arrangement data ID for identifying data on an arrangement of strokes made by an input device, in association with one another. In FIG. 5A, text data, image data, tables, graphics, and the like after character recognition are omitted.

The stroke arrangement data is to be used for displaying one stroke data on the display 220. For example, when the user draws an alphabet "S" with an input device in one stroke, one stroke data ID is assigned to the alphabet "S" to be identified. When the user draws an alphabet "T" with an input device in two strokes, two stroke data IDs are assigned to the alphabet "T" to be identified.

The stroke arrangement data includes detailed information as illustrated in FIG. 5B. FIG. 5B is a conceptual diagram illustrating a data structure of the stroke arrangement data. One stroke arrangement data includes a plurality of stroke data. Each stroke data includes a stroke data ID for identifying that stroke data, start time when drawing of that stroke starts, end time when drawing of that stroke ends, a color of the stroke, a width of the stroke, a recognition group, type, and a coordinate array data ID for identifying arrangement of points of the stroke.

The recognition group is a group of stroke data forming hand drafted data to be collectively character-recognized as one or more characters. The type indicates the determined type, for example, a character or a graphic, to which the stroke data belongs. Types also include English cursive.

Further, the coordinate array data includes detailed information as illustrated in FIG. 5C. FIG. 5C is a conceptual diagram illustrating a data structure of the coordinate array data. As illustrated in FIG. 5C, the coordinate array data includes coordinates (X coordinate value and Y coordinate value) of a point on the display 220, time difference (in milliseconds) from the start of drawing of the stroke to when the stroke passes that point, and drawing pressure by the pen 2500 on that point. That is, one coordinate array data in FIG. 5B is a collection of one-point data in FIG. 5C. For example, in case in which a user draws the alphabet "S" with the input device in one stroke, the stroke passes a plurality of points. Accordingly, the coordinate array data indicates those passing points in drawing of the stroke.

### Condition under which Stroke Data Belongs to Same Recognition Group

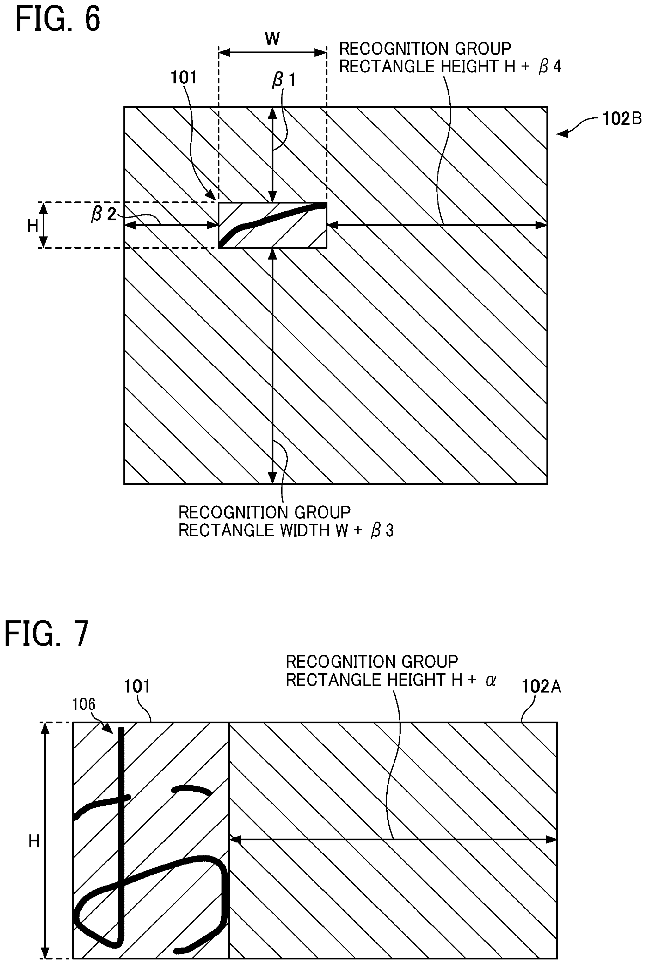

Referring to FIGS. 6 and 7, the conditions for the same recognition group will be described in detail. The area setting unit 28 sets the determination area (for determining whether stroke data is to be included in the recognition group) differently depending on whether input of stroke data is continuously received. In other words, the determination area for determining whether to include the stroke data in the recognition group is differently set depending on whether or not the predetermined time has elapsed after the input device is separated from the touch panel.

A description is given of a case where the time T has not elapsed from a pen-up (in successive input).

FIG. 6 is a diagram illustrating the same recognition group in a case where the time T has not elapsed from the pen-up. The circumscribed rectangle of one or more strokes in successive input is the recognition group rectangle 101. The area of the neighborhood rectangle 102B in successive input is defined with respect to the recognition group rectangle 101 as follows.

The upper end of the neighborhood rectangle 102B is shifted upward from the upper end of the recognition group rectangle 101 by the value β1. The left end of the neighborhood rectangle 102B is shifted leftward from the left end of the recognition group rectangle 101 by the value β2. The lower end of the neighborhood rectangle 102B is shifted downward from the lower end of the recognition group rectangle 101 by the width W of the recognition group rectangle 101 plus the value β3. The right end of the neighborhood rectangle 102B is shifted rightward from the lower end of the recognition group rectangle 101 by the height H of the recognition group rectangle 101 plus the value β4.

Stroke data having a portion protruding from the neighborhood rectangle 102 is determined as having been handwritten in the neighborhood rectangle 102 when the proportion of the protruding portion is equal to or less than a threshold. Stroke data handwritten in the recognition group rectangle 101 may or may not be regarded as being contained in the neighborhood rectangle 102.

Therefore, the stroke data in the recognition group rectangle 101 and the stroke data in the neighborhood rectangle 102 belong to the same recognition group.

The margins are, for example, β1 = β2 = 1.5 cm, and β3 = β4 = 2 cm. When the width W of the recognition group rectangle 101 is 1.5 cm and the height H thereof is 0.5 cm, the width and height of the neighborhood rectangle 102B are as follows.
Width: the value β2 + the width W of the recognition group rectangle 101 + the height H of recognition group rectangle 101 + the value β4 = 5.5 cm
Height: the value β1 + the height H of the recognition group rectangle 101 + the width W of the recognition group rectangle 101 + the value β3 = 5.5 cm

The margins vary depending on the size of the display 220, the number of pixels, and the intended use. The above-described margins are examples in a case where hand drafted data has a size sharable by several persons on the display 220 of about 40 inches and 2880 × 2160 pixels. The same applies to a case where stroke is input in a manner different from successive input.

The values β1 and β2 are respectively added upward and leftward to the recognition group rectangle 101 as margins for receiving handwriting of stroke data in order to recognize the following stroke data. Japanese characters are often written in the downward direction or rightward direction. However, there are Japanese characters (e.g., " 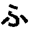 " pronounced as "hu") in which a stroke is drawn on the left of the previous stroke, and there are characters (e.g., "i" and "j") in which a stroke is drawn above the previous stroke. Therefore, the neighborhood rectangle 102 is enlarged leftward and upward directions by the value β1 and the value β2, respectively.

The margin for receiving handwriting of stroke data is provided on the right of the recognition group rectangle 101 considering the characteristics of construction of Chinese characters. Specifically, for example, in a case where the user successively draws a stroke on the right of " 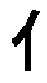 " (a left part of a Chinese character), the height of " 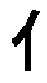 " is assumed to be the character size, and the neighborhood rectangle 102B is enlarged by the size of one character in the rightward direction.

The margin is provided below the recognition group rectangle 101 considering characteristics of construction of Chinese characters. For example, in a case where the user successively draws a stroke below " 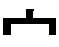 " (an upper part of a Chinese character), the width of " 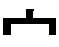 " is assumed to be the character size, and the neighborhood rectangle 102B is enlarged by the size of one character in the downward direction.

A description is given of a case where the time T has elapsed from a pen-up.

FIG. 7 is a diagram illustrating the same recognition group in a case where the time T has elapsed from the pen-up. The circumscribed rectangle of one or more stroke data sequentially input within the time T from a pen-up is the recognition group rectangle 101. The area of the neighborhood rectangle 102A for the case where the time T has elapsed is defined with respect to the recognition group rectangle 101 as follows.
Height: height H of the recognition group rectangle 101
Width: height H of the recognition group rectangle 101 + α from the right end of the recognition group rectangle 101

When the time T has elapsed from the pen-up, on the assumption of the character size of Japanese horizontal writing, the display apparatus 2 sets the neighborhood rectangle 102A extending in the rightward direction by one character size. Specifically, the area setting unit 28 expands the neighborhood rectangle 102A in the rightward direction by the value α on the assumption that the user handwrites a stroke rightward with a blank space from the recognition group rectangle 101. The area setting unit 28 determines only the rightward area of the circumscribed rectangle (the recognition group rectangle 101) of the one or more already-input stroke data as the determination area (the neighborhood rectangle 102A) for determining whether to include the next stroke data in the recognition group.

The display apparatus 2 determines that a Japanese character 106 " 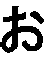 " (pronounced as "o") in the recognition group rectangle 101 and the stroke data in the neighborhood rectangle 102A belong to the same recognition group.

The value α is, for example, 3 cm. When the recognition group rectangle 101 has a width of 4 cm and a height of 6 cm, the neighborhood rectangle 102A has the following width and height.
Width: height H of the recognition group rectangle 101 + the value α = 9 cm
Height: Height H of the recognition group rectangle 101 = 6 cm

As described above, the area setting unit 28 differently sets the determination area (the neighborhood rectangle 102) for determining whether to include next stroke data in the recognition group depending on whether or not the time T has elapsed after the input device is separated from the touch panel.

A description is given of conditions under which stroke data is not included in the same recognition group.

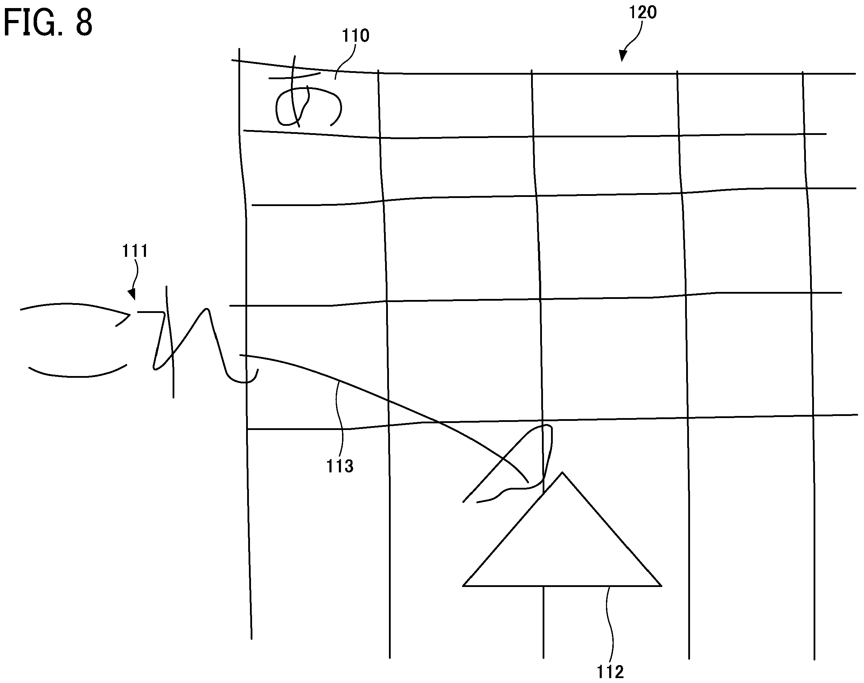

There are not a few cases where it is not desired to include stroke data handwritten in the neighborhood rectangle 102 in the same recognition group as that of previous stroke data. A detailed description of this is given below, with reference to FIG. 8. FIG. 8 illustrates a character 110 and a table 120 handwritten on a screen. The user may handwrite a frame line of the table 120 while handwriting the character 110, that is, before the time T elapses from the handwriting of the character 110. In this case, it is difficult for the display apparatus 2 to separate the character 110 from the table 120 and perform character recognition on the character 110. That is, the frame line of the table 120 may be erroneously character-recognized together with the character 110 " 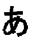 " (Japanese hiragana character pronounced as "a").

In some cases, the user writes an explanatory text 111 outside the table 120 and draws with strokes an arrow 113 pointing at a graphic 112 or the like in the table 120. In this case, the arrow 113 is included in the neighborhood rectangle 102 (see FIG. 7) after the time T has elapsed from the handwriting of the explanatory text 111 " 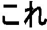 " (Japanese meaning "this"). Accordingly, there is a possibility that the explanatory text 111 " 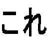 " and the arrow 113 are collectively character-recognized.

Therefore, in the case of FIG. 8, it is preferable not to include the stroke data in the neighborhood rectangle 102 in the same recognition group.

Therefore, the exclusion unit 29 of the present embodiment determines a condition under which the stroke data is not included in the same recognition group as that of previous stroke data as follows.

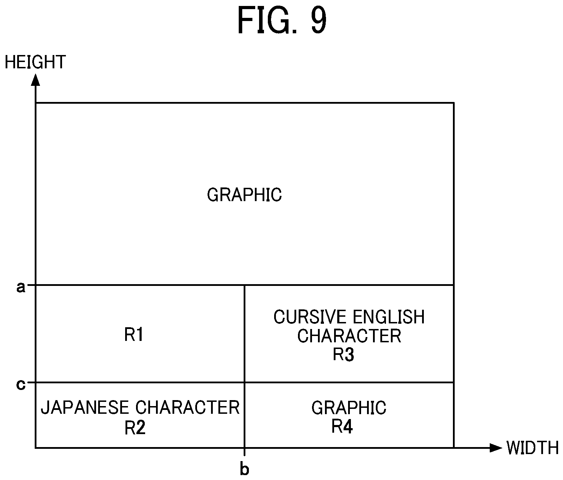

FIG. 9 is a diagram illustrating a condition under which stroke data is not included in the same recognition group. The exclusion unit 29 excludes, from the same recognition group, stroke data that is contained in the neighborhood rectangle 102 but satisfies excluding condition (i) or (ii) presented below.
(i) the stroke data has a height larger than a threshold value a; and (ii) the stroke data has a width larger than a threshold value b and a height smaller than a threshold value c smaller than the threshold value a.

The threshold value a (an example of a first threshold value) and the threshold value b (an example of a second threshold value) are, for example, 9 cm. The threshold value c (an example of a third threshold value) is, for example, 2.5 cm. These threshold values vary depending on the size of the display 220, the number of pixels of the display 220, how many people share characters, and the like.

The excluding condition (i) is for setting the threshold value a as the maximum height of a character and determining that stroke data exceeding the threshold value a is a graphic. The excluding condition (ii) is for determining that stroke data having a width exceeding the threshold value b is a graphic. The threshold value b is the maximum width of a general character. Further, the excluding condition (ii) is for including English cursive in one recognition group.

A description is given of determining whether stroke data belongs to the same recognition group using regions R1 to R4 divided by threshold values a, b, and c in FIG. 9.

Stroke data entirely contained in the regions R1 and R2 does not satisfy the excluding conditions (i) and (ii) and is assumed to be a Japanese character. Accordingly, the stroke data entirely contained in the regions R1 and R2 is not excluded from the same recognition group.

Stroke data entirely contained in the regions R1, R2, and R3 does not satisfy the excluding conditions (i) and (ii) and is assumed to be a Japanese character. Accordingly, the stroke data entirely contained in the regions R1, R2, and R3 is not excluded from the same recognition group. These conditions cope with English cursive. Specifically, stroke data of cursive characters such as "English" handwritten in one stroke is not excluded from the same recognition group (is not regarded as a graphic), and thus the display apparatus 2 recognizes the stroke data as characters. The display apparatus 2 may recognize stroke data entirely contained in the regions R1, R2, and R3 as English cursive.

Stroke data entirely contained in the regions R2 and R4 satisfies the excluding condition (ii) and is assumed to be a graphic (for example, a horizontal line). Accordingly, the stroke data entirely contained in the regions R2 and R4 is excluded from the same recognition group.

Stroke data entirely contained in the regions R1 to R4 does not satisfy the excluding conditions (i) and (ii) and is assumed to be a Japanese character. Accordingly, the stroke data entirely contained in the regions R1 to R4 is not excluded from the same recognition group. Also in this case, English cursive can be recognized.

As described above, depending on whether or not the stroke data satisfies the excluding condition (i) or (ii), the exclusion unit 29 forcibly determines the stroke data contained in the neighborhood rectangle 102 as not belonging to the same recognition group. Thus, even when a graphic and a character are handwritten in a mixed manner, the character recognition unit 23 recognizes the character by separating the character from the graphic.

In addition to the excluding conditions (i) and (ii), there are following excluding conditions for the same recognition group as presented below.

Excluding condition 1: The stroke data is not contained in the neighborhood rectangle 102. Excluding condition 2: An immediately preceding operation with the pen 2500 in use includes processing, such as "character conversion," other than stroke drawing. Excluding condition 3: In a special example such as area control, stroke data is determined as being input in another area. Excluding condition 4: The pen type is different.

A description is given below of a sequence of operations.

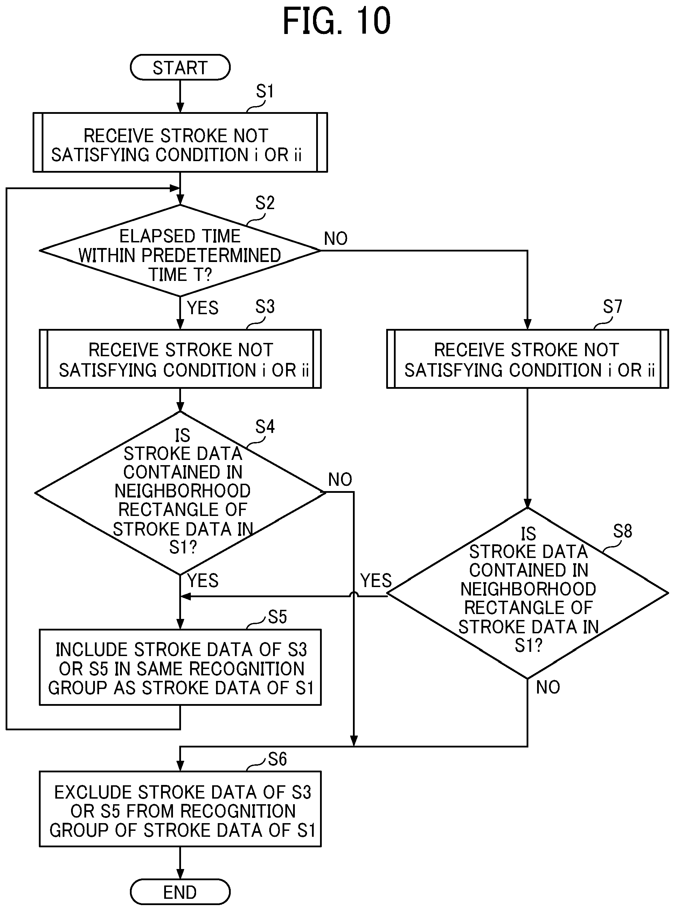

FIG. 10 is a flowchart illustrating a procedure in which the character recognition unit 23 determines stroke data of the same recognition group. The process of FIG. 10 is repeatedly executed while the display apparatus 2 is on.

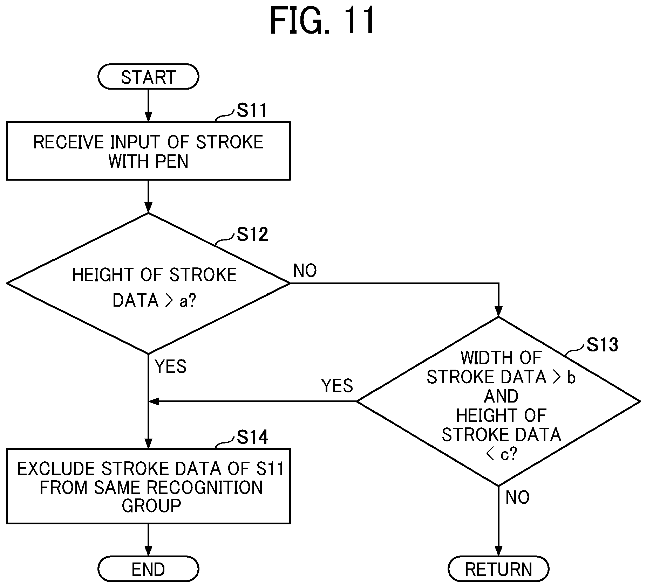

The display apparatus 2 receives input of a stroke (proceeding stroke) relative to which whether a subsequent stroke is grouped in the same recognition group is determined (S1). The input receiving unit 21 detects coordinates of the points touched by the input device, and the drawing data generation unit 22 generates stroke data. The display control unit 24 controls the display 220 to display the stroke data. The exclusion unit 29 determines whether or not the stroke data satisfies the excluding condition (i) or (ii) under which the stroke data does not belong to the same recognition group (see FIG. 9). Stroke data that disagrees with the excluding condition (i) or (ii) under which the stroke data does not belong to the same recognition group is subjected to subsequent processing. The determination of step S1 will be described with reference to the flowchart of FIG. 11.

The area setting unit 28 determines whether or not the time T has elapsed from a pen-up after completion of input of the stroke from which the stroke data is generated in step S1 (S2).

In a state where the time T has not elapsed (Yes in S2), the display apparatus 2 receives input of a stroke (continuous input) (S3). The input receiving unit 21 detects the coordinates of the points touched by the input device, and the drawing data generation unit 22 generates stroke data. The display control unit 24 controls the display 220 to display the stroke data. The exclusion unit 29 determines whether or not the stroke data of S3 satisfies the above-described excluding condition (i) or (ii) under which the stroke data does not belong to the same recognition group. Stroke data that disagrees with the excluding condition (i) or (ii) is subjected to subsequent processing.

The area setting unit 28 sets the neighborhood rectangle 102B illustrated in FIG. 6 for successive input, based on the stroke data of step S1, and determines whether the stroke data of step S3 is contained in the neighborhood rectangle 102 (S4).

When the stroke data of step S3 is determined as being contained in the neighborhood rectangle 102B (Yes in S4), the area setting unit 28 determines that the stroke data of step S1 and the stroke data of S3 belong to the same recognition group (S5).

When the stroke data of step S3 is not contained in the neighborhood rectangle 102B (No in S4), the area setting unit 28 determines that the stroke data of step S1 and the stroke data of S3 do not belong to the same recognition group, that is, exclude the stroke data of S3 from the recognition group of stroke data of step S1 (S6).

In a state where the elapsed time from the pen-up after the handwriting of the stroke in step S1 exceeds the time T (No in S2), the display apparatus 2 receives input of a stroke (S7). The input receiving unit 21 detects coordinates of the points touched by the input device, and the drawing data generation unit 22 generates stroke data. The display control unit 24 controls the display 220 to display the stroke data. The exclusion unit 29 determines whether or not the stroke data satisfies the excluding condition (i) or (ii) under which the stroke data does not belong to the same recognition group. Stroke data that disagrees with the excluding condition (i) or (ii) under which the stroke data does not belong to the same recognition group is subjected to subsequent processing.

Next, the area setting unit 28 sets the neighborhood rectangle 102A illustrated in FIG. 7 for the case where the time T has elapsed, based on the stroke data of step S1, and determines whether or not the stroke data of step S7 is contained in the neighborhood rectangle 102A (S8).

When the stroke data of step S7 is determined as being contained in the neighborhood rectangle 102A (Yes in S8), the area setting unit 28 determines that the stroke data of step S1 and the stroke data of S7 belong to the same recognition group (S5).

When the stroke data of step S7 is not contained in the neighborhood rectangle 102A (No in S8), the area setting unit 28 determines that the stroke data of step S1 and the stroke data of S7 do not belong to the same recognition group, that is, exclude the stroke data of S7 from the recognition group of the stroke data of step S1 (S6).

FIG. 11 is a flowchart for determining whether the stroke data satisfies the excluding condition (i) or (ii) under which the stroke data does not belong to the same recognition group, described in steps S1, S3, and S7 in FIG. 10.

The display apparatus 2 receives input of a stroke with an input device (e.g., an electronic pen) (S11). The input receiving unit 21 detects coordinates of the points touched by the input device, and the drawing data generation unit 22 generates stroke data. The display control unit 24 controls the display 220 to display the stroke data.

The exclusion unit 29 determines whether or not the height of the stroke data is larger than the threshold value a (S12).

When the height of the stroke data is equal to or smaller than the threshold value a (No in S12), the exclusion unit 29 determines whether the width of the stroke data in step S11 is larger than the threshold value b and the height thereof is smaller than the threshold value c (S13).

In a case where the determination of either step S12 or step S13 is Yes, the exclusion unit 29 excludes the stroke data of step S11 from the same recognition group (S14).

When the determination in step S13 is No, the area setting unit 28 determines that the stroke data of step S11 is to be subjected to the determination of the same recognition group. That is, the area setting unit 28 determines whether or not the stroke data of step S11 is contained in the neighborhood rectangle 102 in the process of FIG. 10.

### Example of Character Recognition Result

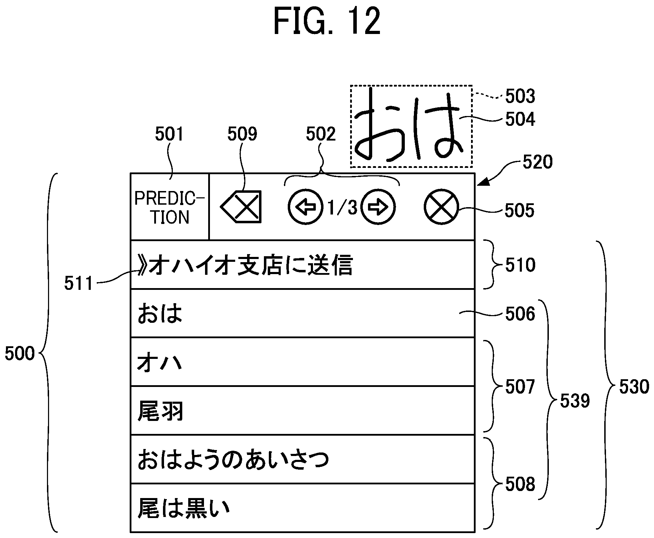

Referring to FIG. 12, a description is given of a recognition result of hand drafted data. FIG. 12 illustrates an example of an operation guide 500 provided by the display apparatus 2 and selectable candidates 530 displayed by the operation guide 500. The operation guide 500 is displayed after elapse of a predetermined time from the pen-up after the user inputs a handwritten object 504. Specifically, as the user handwrites a stroke, the input receiving unit 21 detects coordinates of the stroke, and the drawing data generation unit 22 generates stroke data based on the trajectory of coordinates. When the user handwrites a plurality of strokes, hand drafted data having one or more stroke data is generated. The predetermined time may be different from or the same as the time T.

The operation guide 500 displays an operation command candidate 510 " 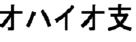 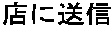 " (pronounced as "ohaio-shiten ni soushin" and meaning "send to Ohio branch"), a recognized character string candidate 506 " 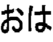 " (Japanese hiragana character string pronounced as "oha"), converted character string candidates 507, and predicted converted-character string candidates 508. The selectable candidates 530 includes the recognized character string candidate 506, the converted character string candidates 507, the predicted converted-character string candidates 508, and the operation command candidate 510. The selectable candidates 530 other than the operation command candidate 510 are referred to as character string candidates 539. The recognized character string candidate 506 is an example of the result of the character recognition.

The handwritten object 504 is characters " 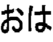 " (Japanese hiragana characters, pronounced as "oha") handwritten by the user. That is, with the neighborhood rectangle 102 of the present embodiment, the characters " 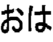 " is determined as belonging to the same recognition group. The display apparatus 2 displays a rectangular handwriting area enclosure 503 enclosing the handwritten object 504 of the same recognition group. In the example illustrated in FIG. 12, the operation guide 500 is displayed in response to input of two characters as an example, but the time of display thereof is not limited thereto. The operation guide 500 is displayed in response to suspension of handwriting by the user. One or more stroke data included in the same recognition group until the interruption are collectively character-recognized to one or more characters. Thus, the number of characters in the handwritten object 504 is any number.

As each of the recognized character string candidate 506, the converted character string candidates 507, and the predicted converted-character string candidates 508, one or more candidates are arranged in descending order of probability. The recognized character string candidate 506 " 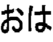 " (Japanese hiragana characters, pronounced as "oha") is a candidate of recognition result. In this example, the character recognition unit 23 has correctly recognized " 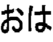 ."

The converted character string candidates 507 are results of kana-kanji conversion (e.g., Japanese katakana characters " 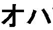 " pronounced as "oha," a mixture of kanji and hiragana characters " 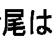 " pronounced as "owa" and meaning "tail is," or kanji characters " 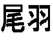 " pronounced as "owa") of the recognized character string candidate 506. Alternatively, the converted character string candidates 507 are results of converted character string candidates (for example, idioms including " 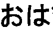 ") converted from the result of kana-kanji conversion. The predicted converted-character string candidates 508 are candidates predicted from the converted character string candidates 507, respectively. In this example, " 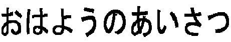 " (Japanese character string pronounced as "ohayou no aisatsu" and meaning "morning greeting") and " 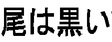 " (Japanese character string pronounced as "o wa kuroi" and meaning "tail is black") are displayed.

The operation command candidate 510 is a predefined operation command candidate (command such as file operation or text editing) displayed in accordance with the recognized character. In the example of FIG. 12, a line head character "» " 511 is an indication of the operation command candidate. In the example in FIG. 12, the recognized character string candidate 506 " 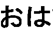 " (pronounced as "oha") partially matches definition data, and the corresponding operation command candidate 510 is displayed.

The operation command candidate 510 is displayed when the operation command definition data including the converted character string is found and is not displayed in the case of no-match.

The operation guide 500 includes an operation header 520 including buttons 501, 502, 505, and 509. The button 501 is a graphical representation for receiving an operation of switching between predictive conversion and kana conversion. The button 502 is a graphical representation for receiving page operation of the candidate display. In the example illustrated in FIG. 12, there are three candidate display pages, and the first page is currently displayed. The button 505 is a graphical representation for receiving closing of the operation guide 500. When the operation receiving unit 27 receives pressing by the user of the button 505, the display control unit 24 deletes the displayed objects other than the handwritten object. The button 509 is a graphical representation for receiving batch deletion of the display. When the operation receiving unit 27 receives pressing by the user of the button 509, the display control unit 24 deletes the displayed objects illustrated in FIG. 12, thereby enabling the user to perform hand drafted input from the beginning.

The display apparatus 2 of the present embodiment focuses on the fact that a plurality of stroke data to be collectively recognized differs depending on whether or not successive input is being performed. The display apparatus 2 sets the neighborhood rectangle 102 (for determining stroke data to be included in the same recognition group) differently depending on whether the time T has elapsed. Thus, the neighborhood rectangle 102 is appropriately set.

In addition, the display apparatus 2 of the present embodiment excludes, from the same recognition group, stroke data that is contained in the neighborhood rectangle 102 but matches the excluding condition under which the stroke data does not belong to the same recognition group. Accordingly, the display apparatus 2 accurately recognizes characters even when the user handwrites characters and graphics in a mixed manner.

### Embodiment 2

In this embodiment, a description is given of a display system 19 including a server 12 as an example of an information processing apparatus that performs character recognition.

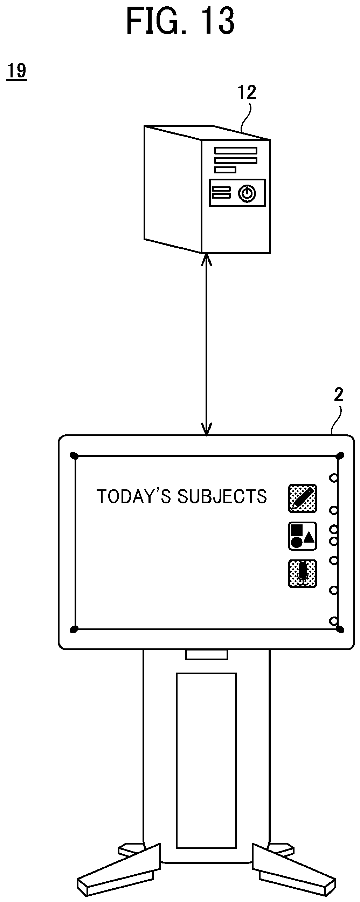

FIG. 13 is a schematic diagram illustrating an example of a configuration of the display system 19 according to the present embodiment. The display apparatus 2 and the server 12 are connected to each other through a network such as the Internet.

In the display system 19, the display apparatus 2 includes the input receiving unit 21, the drawing data generation unit 22, the display control unit 24, the network communication unit 26, and the operation receiving unit 27 illustrated in FIG. 4.

By contrast, the server 12 includes the character recognition unit 23, the data recording unit 25, the area setting unit 28, the exclusion unit 29, and a network communication unit.

The network communication unit 26 of the display apparatus 2 transmits the stroke data to the server 12. The server 12 performs the same processing as in the flowcharts of FIGS. 10 and 11 and transmits the recognition result to the display apparatus 2.

As described above, in the display system 19, the display apparatus 2 and the server 12 interactively process and display text data.

Now, descriptions are given of other application of the embodiments described above.

The present disclosure is not limited to the details of the embodiments described above, and various modifications and improvements are possible.

For example, in the above-described embodiments, the neighborhood rectangle 102 is set on the assumption of Japanese handwriting from left to right. For a language in which writing direction is not from left to right, the neighborhood rectangle 102 is set in accordance with the writing direction.

In the above-described embodiments, the stroke data is converted mainly into Japanese, but the conversion target language of the stroke data may be other languages (English, Chinese, Hindi, Spanish, French, Arabic, Russian, etc.).

In the description above, the display apparatus 2 being an electronic whiteboard is described as an example but is not limited thereto. A device having a substantially the same functions as the electronic whiteboard may be referred to as an electronic information board, an interactive board, or the like. The present disclosure is applicable to any information processing apparatus having a touch panel. Examples of the information processing apparatus with a touch panel include, but not limited to, a projector, an output device such as a digital signage, a head up display, an industrial machine, an imaging device, a sound collecting device, a medical device, a network home appliance, a laptop computer (personal computer or PC), a mobile phone, a smartphone, a tablet terminal, a game console, a personal digital assistant (PDA), a digital camera, a wearable PC, and a desktop PC.

Further, in the embodiments described above, the display apparatus 2 detects the coordinates of the tip of the pen on the touch panel by optical sensing. Alternatively, the display apparatus 2 may detect the coordinates of the pen tip by another method such as the above-mentioned method using ultrasonic waves. For example, the pen emits an ultrasonic wave in addition to the light, and the display apparatus 2 calculates a distance based on an arrival time of the sound wave. The display apparatus 2 determines the position of the pen based on the direction and the distance, and a projector draws (projects) the trajectory of the pen based on stroke data.

In the block diagram such as FIG. 4, functional units are divided into blocks in accordance with main functions of the display apparatus 2, in order to facilitate understanding the operation by the display apparatus 2. Each processing unit or each specific name of the processing unit is not to limit a scope of the present disclosure. The processing implemented by the display apparatus 2 may be divided into a larger number of processing units depending on the content of the processing. In addition, a single processing unit can be further divided into a plurality of processing units.

Each of the functions of the described embodiments may be implemented by one or more processing circuits or circuitry. In this specification, the "processing circuit or circuitry" in the present specification includes a programmed processor to execute each function by software, such as a processor implemented by an electronic circuit, and devices, such as an application specific integrated circuit (ASIC), a digital signal processor (DSP), a field programmable gate array (FPGA), and conventional circuit modules designed to perform the recited functions.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

One aspect of the present disclosure provides an information processing apparatus that includes a communication unit to receive a plurality of stroke data respectively generated based on a plurality of strokes input by hand drafting, the plurality of stroke data including first stroke data and second stroke data being input after the first stroke data; an area setting unit to set a determination area differently depending on whether an elapsed time from separation of the input device from the touch panel after input of the first stroke data exceeds a threshold, the determination area being for determining whether to include the second stroke data in a recognition group including the first stroke data; and a character recognition unit to perform character recognition on the recognition group, and the communication unit outputs a result of the character recognition.

## Claims

1. A display system (2; 19) comprising:
an input receiving unit (21) configured to receive a plurality of stroke data input to a touch panel by an input device, the plurality of stroke data including first stroke data and second stroke data input after the first stroke data;
a display control unit (24) configured to display the plurality of stroke data;
an area setting unit (28) configured to set a determination area differently depending on whether an elapsed time from separation of the input device from the touch panel after input of the first stroke data exceeds a threshold, the determination area being for determining whether to include the second stroke data in a recognition group including the first stroke data; and
a character recognition unit (23) configured to perform character recognition on the recognition group,
wherein the display control unit (24) is configured to display, on a screen, a result of the character recognition.

2. The display system (2; 19) according to claim 1,
wherein the area setting unit (28) determines whether the second stroke data is input in succession to the first stroke data based on the elapsed time and sets the determination area differently depending on whether the elapsed time exceeds the threshold.

3. The display system (2; 19) according to claim 1 or 2,
wherein, in a state where the elapsed time from the separation of the input device from the touch panel exceeds the threshold, the area setting unit (28) sets, as the determination area, a rightward area extending from a right end of a circumscribed rectangle of the recognition group including the first stroke data.

4. The display system (2; 19) according to claim 1 or 2,
wherein, in a state where the elapsed time from the separation of the input device from the touch panel is within the threshold, the area setting unit (28) sets, as the determination area, a surrounding area surrounding a circumscribed rectangle of the recognition group including the first stroke data.

5. The display system (2; 19) according to claim 3,
wherein the rightward area has:
an upper end and a lower end respectively equal to an upper end and a lower end of the circumscribed rectangle of the recognition group including the first stroke data; and
a width obtained by adding a margin to a height of the circumscribed rectangle.

6. The display system (2; 19) according to claim 4,
wherein the surrounding area has:
an upper end shifted upward by a margin from an upper end of the circumscribed rectangle of the recognition group including the first stroke data;
a left end shifted leftward by a margin from a left end of the circumscribed rectangle;
a lower end shifted downward by a margin from a lower end of the circumscribed rectangle; and
a right end shifted rightward by a margin from a right end of the circumscribed rectangle.

7. The display system (2; 19) according to any one of claims 1 to 6, further comprising
an exclusion unit (29) configured to exclude the second stroke data in the determination area from the recognition group including the first stroke data in a case where the second stroke data satisfies a predetermined condition.

8. The display system (2; 19) according to claim 7,
wherein the predetermined condition is a condition where:
(i) the second stroke data has a height larger than a first threshold value; or
(ii) the second stroke data has a width larger than a second threshold value and a height smaller than a third threshold value, the third threshold value being smaller than the first threshold value.

9. The display system (2,19) according to any one of claims 1 to 7,
wherein the input receiving unit (21) and the display control unit (24) are implemented by a display apparatus (2), and the area setting unit (28) and the character recognition unit (23) are implemented by a server (12).

10. A method for performing character recognition on a plurality of stroke data, the method comprising:
receiving (S1) a plurality of stroke data input to a touch panel by an input device, the plurality of stroke data including first stroke data and second stroke data input after the first stroke data;
displaying (S1) the plurality of stroke data;
setting (S4,S8) a determination area differently depending on whether an elapsed time from separation of the input device from the touch panel after input of the first stroke data exceeds a threshold, the determination area being for determining whether to include the second stroke data in a recognition group including the first stroke data;
performing character recognition of the recognition group; and
displaying, on a screen, a result of the character recognition.

11. A carrier medium carrying computer readable codes for controlling a computer system to carry out the method according to claim 10.
